# EUROPEAN PATENT SPECIFICATION

(11) **EP 3 706 492 B1**
(45) Date of publication and mention of the grant of the patent: **05.03.2025**
(21) Application number: 18884326.2
(22) Date of filing: 26.11.2018
(51) Int. Cl.: H04W 72/566, H04L 1/1829

(54) **METHOD FOR PREEMPTING RESOURCES FOR DATA TRANSMISSION**
VERFAHREN ZUR BEANSPRUCHUNG VON RESSOURCEN FÜR DATENÜBERTRAGUNG
PROCÉDÉ POUR PRÉEMPTER DES RESSOURCES POUR UNE TRANSMISSION DE DONNÉES

(30) Priority: 29.11.2017 CN 201711230641
(43) Date of publication of application: 09.09.2020
(73) Proprietor: Huawei Technologies Co., Ltd., Longgang District Shenzhen, Guangdong 518129 (CN)
(72) Inventor: DU, Bai, Shenzhen Guangdong 518129 (CN); ZHANG, Peng, Shenzhen Guangdong 518129 (CN); ISLAM, Toufiqul, Ottawa Ontario K2B 7T4 (CA); MAAREF, Amine, Ottawa Ontario K2T 0B7 (CA); LYU, Yongxia, Shenzhen Guangdong 518129 (CN)
(74) Representative: Thun, Clemens
(86) International application number: PCT/CN2018/117422
(87) International publication number: WO 2019/105322

(56) References cited:
- CN-A- 105 101 430
- CN-A- 105 430 590
- CN-A- 106 470 097
- VIVO: "Remaining issues on multiplexing data with different transmission durations", vol. RAN WG1, no. Reno, USA; 20171127 - 20171201, 18 November 2017 (2017-11-18), XP051369541, Retrieved from the Internet <URL:http://www.3gpp.org/ftp/tsg%5Fran/WG1%5FRL1/TSGR1%5F91/Docs/> [retrieved on 20171118]
- HUAWEI ET AL: "Discussion on configuration and design of group common pre-emption Indication", vol. RAN WG1, no. Prague, Czech Republic; 20170821 - 20170825, 20 August 2017 (2017-08-20), XP051316553, Retrieved from the Internet <URL:http://www.3gpp.org/ftp/Meetings_3GPP_SYNC/RAN1/Docs/> [retrieved on 20170820]
- INTEL CORPORATION: "eMBB/URLLC multiplexing for DL", vol. RAN WG1, no. Spokane, USA; 20170403 - 20170407, 2 April 2017 (2017-04-02), XP051242900, Retrieved from the Internet <URL:http://www.3gpp.org/ftp/Meetings_3GPP_SYNC/RAN1/Docs/> [retrieved on 20170402]

## Description

### TECHNICAL FIELD

Embodiments of the present invention relate to the field of wireless communications, and in particular, to a method and corresponding terminal device, computer-readable medium and computer-program product for preempting a resource to transmit data and an apparatus.

### BACKGROUND

A 5G mobile communications system supports an enhanced mobile broadband (enhanced mobile broadband, eMBB) service, an ultra-reliable and low-latency communication (ultra-reliable and low-latency communications, URLLC) service, and a massive machine-type communications (massive machine-type communications, mMTC) service. Typical eMBB services include an ultra-high definition video, augmented reality (augmented reality, AR), virtual reality (virtual reality, VR), and the like. These services are mainly characterized by a large data transmission amount and a quite high transmission rate. Typical URLLC services include tactile interactive applications such as wireless control in an industrial manufacturing or production procedure, motion control of an unmanned vehicle and an unmanned aircraft, remote repair, and remote surgery. These services mainly characterized by ultra-high reliability, low latency, a relatively small data transmission amount, and burstiness. Typical mMTC services include power distribution automation of a smart grid, a smart city, and the like that are mainly characterized by a huge quantity of web-connected devices, a relatively small data transmission amount, and insensitivity of data to transmission latency. These mMTC terminals need to satisfy requirements for low costs and a very long standby time.

Different services have different requirements for a mobile communications system. Therefore, how to better support all data transmission requirements of a plurality of different services is one of technical problems that need to be resolved in the current 5G mobile communications system.

A data packet of a URLLC service is generated unexpectedly and randomly, and no data packet may be generated within a quite long period of time, or a plurality of data packets may be generated within a quite short period of time. In most cases, the data packet of the URLLC service is a small packet, for example, with 32 bytes or 50 bytes. A feature of the data packet of the URLLC service affects an allocation mode of a transmission resource in the communications system. The transmission resource herein includes but is not limited to a time-domain symbol, a frequency-domain resource, a time-frequency resource, a codeword resource, a beam resource, and the like. Transmission resources are usually allocated by a base station. The following uses a base station as an example for description. If the base station allocates a transmission resource to a URLLC service by reserving a resource, a reserved transmission resource is wasted when no URLLC service data needs to be transmitted. In addition, a short-latency feature of the URLLC service requires that a data packet be transmitted in an extremely short time. Therefore, the base station needs to reserve a sufficiently large bandwidth for the URLLC service, resulting in a severe decrease in transmission resource utilization

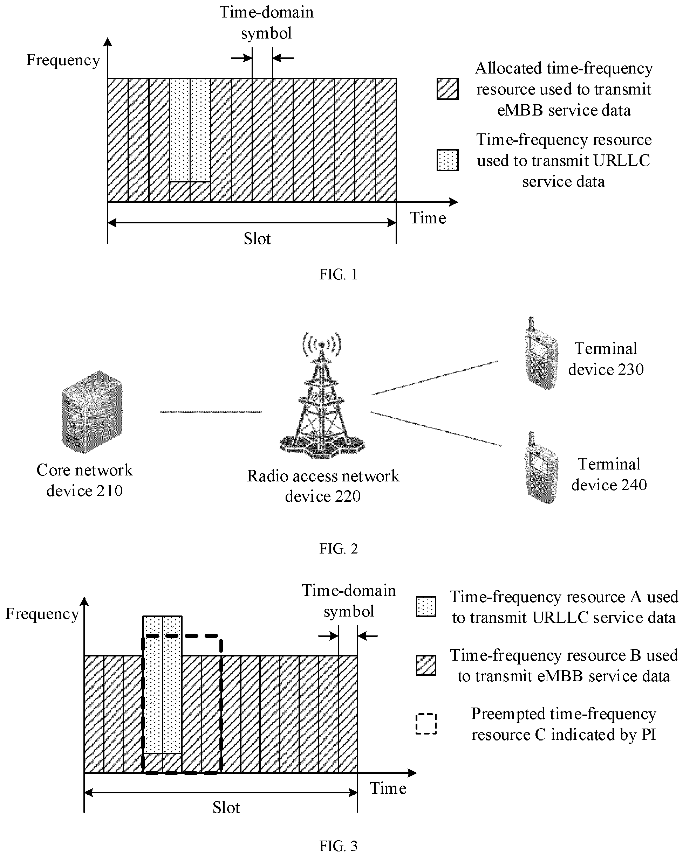

Due to burstiness of the URLLC service data, to improve system resource utilization, the base station usually reserves no resource for downlink data transmission of the URLLC service. When the URLLC service data arrives at the base station, if there is no idle time-frequency resource, to meet an ultra-short latency requirement of the URLLC service, the base station cannot schedule the URLLC service data after a currently scheduled eMBB service data is transmitted. The base station may allocate a resource to the URLLC service data through preemption (preemption). As shown in FIG. 1, preemption herein means that a base station selects some or all of allocated time-frequency resources used to transmit eMBB service data, to transmit URLLC service data. When the URLLC service data preempts some or all of the time-frequency resources used to transmit the eMBB service data, a transmit power of the eMBB service data on the preempted time-frequency resources is set to zero, or no eMBB service data is sent on the preempted time-frequency resources. This may also be referred to as puncturing the eMBB service data or puncturing the time-frequency resources used to transmit the eMBB service data. If a terminal receiving the eMBB service data does not learn of a part of data that is affected by the preemption, the terminal may perform decoding and hybrid automatic repeat request (hybrid automatic repeat request, HARQ) combination by mistaking URLLC service data for the eMBB service data. Consequently, performance of decoding and HARQ combination on the eMBB service data is severely affected. When the resource preemption occurs, to reduce impact of the resource preemption on the eMBB service data, the base station may send a preemption indication (preemption indication, PI) to the terminal that receives the eMBB service data, to notify the terminal of a preempted transmission resource. After receiving the PI, the terminal clears, from a buffer, data received on a time-frequency resource indicated by the PI, to avoid impact of URLLC service data on eMBB service data decoding, thereby improving transmission performance of the eMBB service data. The PI is carried in downlink control information (downlink control information, DCI), and is sent to a group of terminals by using a physical downlink control channel (physical downlink control channel, PDCCH).

When a terminal supports both a URLLC service and an eMBB service, URLLC service data sent to the terminal may preempt a transmission resource used for eMBB service data of the terminal. In this case, after the terminal receives a PI, if the terminal clears, from a buffer, all data received on the time-frequency resource indicated by the PI, the URLLC service data is also cleared.

Further, R1-1719798, 3GPP TSG RAN WG1 Meeting 901, 27^{th} November - 1^{st} December 2017, Reno, USA, refers to remaining issues on multiplexing data with different transmission durations.

### SUMMARY

The above mentioned problem is solved by the subject matter of the independent claims. The present invention provides a method for preempting a resource to transmit data and corresponding terminal device, computer-readable storage medium and computer program product.

### BRIEF DESCRIPTION OF DRAWINGS

FIG. 1 is a schematic diagram of preempting, by URLLC service data, a time-frequency resource used to transmit eMBB service data;
FIG. 2 is a schematic architecture diagram of a mobile communications system to which an unclaimed embodiment of this application is applied;
FIG. 3 is a schematic diagram of a relationship among a time-frequency resource A, a time-frequency resource B, and a time-frequency resource C according to an unclaimed embodiment of this application;
FIG. 4 is another schematic diagram of preempting, by URLLC service data, a time-frequency resource used to transmit eMBB service data according to an unclaimed embodiment of this application;
FIG. 5 is a schematic flowchart of a method for preempting a resource to transmit data according to an embodiment of this application;
FIG. 6 is a schematic flowchart of another method for preempting a resource to transmit data according to an unclaimed embodiment of this application;
FIG. 7 is a schematic flowchart of still another method for preempting a resource to transmit data according to an unclaimed embodiment of this application;
FIG. 8 is still another schematic diagram of preempting, by URLLC service data, a time-frequency resource used to transmit eMBB service data according to an unclaimed embodiment of this application;
FIG. 9 is a schematic flowchart of still another method for preempting a resource to transmit data according to an unclaimed embodiment of this application;
FIG. 10 is a schematic structural diagram of a communications apparatus according to an unclaimed embodiment of this application;
FIG. 11 is a schematic structural diagram of another communications apparatus according to an unclaimed embodiment of this application; and
FIG. 12 is a schematic structural diagram of still another communications apparatus according to an unclaimed embodiment of this application.

### DESCRIPTION OF EMBODIMENTS

The following describes the technical solutions in the embodiments of the present invention with reference to the accompanying drawings in the embodiments of the present invention.

FIG. 2 is a schematic architectural diagram of a mobile communications system to which an unclaimed embodiment of this application is applied. As shown in FIG. 2, the mobile communications system includes a core network device 210, a radio access network device 220, and at least one terminal device (for example, a terminal device 230 and a terminal device 240 in FIG. 2). The terminal device is connected to the radio access network device in a wireless manner, and the radio access network device is connected to the core network device in a wireless or wired manner. The core network device and the radio access network device may be different independent physical devices, or a function of the core network device and a logical function of the radio access network device may be integrated into a same physical device, or a function of a part of the core network device and a function of a part of the radio access network device may be integrated into a physical device. The terminal device may be at a fixed location or may be mobile. FIG. 2 is merely a schematic diagram, and the communications system may further include another network device, for example, may further include a wireless relay device and a wireless backhaul device that are not drawn in FIG. 2. Quantities of core network devices, radio access network devices, and terminal devices included in the mobile communications system are not limited in this embodiment of this application.

The radio access network device is an access device that is connected to the mobile communications system by the terminal device in a wireless manner, and may alternatively be a base station NodeB, an evolved base station eNodeB, a base station in a 5G mobile communications system or a new radio (new radio, NR) communications system, a base station in a future mobile communications system, an access node in a Wi-Fi system, or the like. A specific technology and a specific device form used by the radio access network device are not limited in this embodiment of this application. In this application, the radio access network device is briefly referred to as a network device. Unless otherwise specified, in this application, all network devices are radio access network devices. In this application, the terms 5G and NR may be equivalent.

The terminal device may also be referred to as a terminal (terminal), user equipment (user equipment, UE), a mobile station (mobile station, MS), a mobile terminal (mobile terminal, MT), or the like. The terminal device may be a mobile phone (mobile phone), a tablet computer (Pad), a computer with a wireless transceiver function, a virtual reality (Virtual Reality, VR) terminal device, an augmented reality (Augmented Reality, AR) terminal device, a wireless terminal in an industrial control (industrial control), a wireless terminal in self driving (self driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like.

The radio access network device and the terminal device may be deployed on the land, including an indoor device, an outdoor device, a handheld device, or a vehicle-mounted device; may be deployed on the water; or may be deployed on an airplane, a balloon, and a satellite in the air. Application scenarios of the radio access network device and the terminal device are not limited in this embodiment of this application.

The radio access network device and the terminal device may communicate with each other by using a licensed spectrum (licensed spectrum), or may communicate with each other by using an unlicensed spectrum (unlicensed spectrum), or may communicate with each other by using both a licensed spectrum and an unlicensed spectrum. The radio access network device and the terminal device may communicate with each other by using a spectrum below 6 gigahertz (gigahertz, GHz), or may communicate with each other by using a spectrum above 6 GHz, or may communicate with each other by using both a spectrum below 6 GHz and a spectrum above 6 GHz. A spectrum resource used between the radio access network device and the terminal device is not limited in this embodiment of this application.

Downlink data transmission between a sending device that is the network device and a receiving device that is the terminal device is used as an example below for description.

When a time-frequency resource used to transmit eMBB service data is affected, the network device may send indication information for assisting in reception to the terminal device. The indication information for assisting in reception is used to notify the terminal device of an affected time-frequency region. After receiving the indication information for assisting in reception, the terminal device may flush corresponding eMBB service data that is received in the affected time-frequency region, where the eMBB service data in the region does not participate in decoding or HARQ combination, thereby improving a decoding success rate and improving data transmission efficiency.

That the time-frequency resource used to transmit eMBB service data is affected includes:
(1) The time-frequency resource used to transmit eMBB service data is preempted to transmit other service data or another signal, or is set to a reserved resource, for example, the time-frequency resource is preempted to transmit URLLC service data; or to transmit an interference management-related signal; or to be reserved for use in another system. The interference management-related signal herein may include a reference signal or a zero-power reference signal. The reserved resource herein may be reserved for use in a long term evolution (long term evolution, LTE) system, and is applied to a scenario in which NR and LTE coexist. For example, first three time domain symbols of a subframe may be reserved for use by a PDCCH in LTE. The reserved resource may alternatively be used to measure an NR reference signal. For example, when bandwidth parts (bandwidth part, BWP) of two UEs partially overlap, reference signals of the two UEs may interfere with each other. In this case, a part of an overlapped time-frequency resource of the two UEs may be reserved in a resource reservation manner, to avoid interference. In a scenario in which a control channel and a data channel are multiplexed, after a part of a resource of one channel is configured as a reserved resource, the other channel can use the reserved resource. In this application, unless otherwise specified, a symbol may be equivalent to a time-domain symbol.
(2) The time-frequency resource used to transmit eMBB service data is interfered by another signal, for example, interfered by a signal of a neighboring cell.

When the time-frequency resource used to transmit the eMBB service data is affected, the network device has two different processing manners for the eMBB service data. One manner is puncturing. In this case, the eMBB service data on the affected time-frequency resource is punctured, that is, the eMBB service data is not sent on the affected time-frequency resource, or it may be understood that a transmit power of the eMBB service data on the affected time-frequency resource is set to zero. The other manner is a rate matching manner. In this case, the affected time-frequency resource does not carry the eMBB service data. When performing data mapping on the eMBB service data, the network device does not use the affected time-frequency resource as a time-frequency resource carrying the eMBB service data. When the network device processes data transmitted on the affected time-frequency resource in the puncturing manner, when receiving the eMBB service data, the terminal device may correspondingly flush the data transmitted on the affected time-frequency resource, so that the data transmitted on the affected time-frequency resource does not participate in decoding of the eMBB service data. When the network device processes the data transmitted on the affected time-frequency resource in the rate matching manner, the terminal device does not extract the data from the affected time-frequency resource when performing demodulation processing on the eMBB service data.

For the reserved resource, the network device and the terminal device usually perform processing in a rate matching manner. Therefore, the reserved resource may also be referred to as a rate matching resource (rate matching resource, RMR).

When the time-frequency resource used to transmit the eMBB service data is preempted to transmit the URLLC service data, the indication information for assisting in reception may also be referred to as a preemption indication (preemption indication, PI). A specific name of the indication information for assisting in reception is not limited in this application.

It may be understood that this embodiment of this application may also be applied to another application scenario. For example, first information preempts a time-frequency resource used to transmit second information, or transmission of the first information interferes with transmission of the second information. A transmission priority of the first information is higher than that of the second information, and a transmission resource of the second information is allowed to be preempted. The application scenario is not limited in this application. The affected service data herein may be a uMTC service or another service in addition to the eMBB service. An example of the time-frequency resource that is preempted by the URLLC service data and that is used to transmit the eMBB service data is used to describe this embodiment provided in this application. However, a specific type of the service data is not limited in this embodiment of this application.

This application may be applied to the following two scenarios:
Scenario 1: UE 1 supports data transmission of both a URLLC service and an eMBB service, and URLLC service data of the UE 1 preempts a transmission resource used to transmit eMBB service data of UE 2. The UE 1 may be a terminal device 230 in FIG. 2, and the UE 2 may be a terminal device 240 in FIG. 2. Because the UE 1 supports data transmission of both the URLLC service and the eMBB service, the UE 1 may receive PI from a network device.
Scenario 2: UE 1 supports data transmission of both a URLLC service and an eMBB service, and URLLC service data of the UE 1 preempts a transmission resource used to transmit eMBB service data of the UE 1.

When UE supports both the URLLC service and the eMBB service, for example, the UE 1 in the foregoing scenario 1 and scenario 2, the UE may receive PI from a network device, and the PI indicates a preempted resource. After receiving the PI, how the UE determines, based on the PI, whether to flush data that is in a buffer and that is transmitted by using a time-frequency resource that overlaps a time-frequency resource indicated by the PI is a technical problem to be resolved in this application.

### Embodiment 1

In scenario 1 and scenario 2, it is assumed that a time-frequency resource allocated by the network device to the URLLC service data by using DCI_A is a time-frequency resource A, and the URLLC service data is referred to as data A; a time-frequency resource allocated by the network device to the eMBB service data by using DCI_B is a time-frequency resource B, and the eMBB service data is referred to as data B; the PI indicates that a preempted time-frequency resource is a time-frequency resource C; an overlapped time-frequency resource of the time-frequency resource A and the time-frequency resource C is a time-frequency resource D; and an overlapped time-frequency resource of the time-frequency resource B and the time-frequency resource C is a time-frequency resource E. The time-frequency resource B herein may be allocated to both the UE 2 in scenario 1 and the UE 1 in scenario 2. The DCI_A is DCI used by the network device to schedule the URLLC service data, and the DCI_B is DCI used by the network device to schedule the eMBB service data. FIG. 3 is a schematic diagram of a relationship among the time-frequency resource A, the time-frequency resource B, and the time-frequency resource C.

After the UE 1 receives the PI, the UE 1 may determine, based on a feature of the DCI_A or a feature of the data A, whether data indicated by the DCI_A exists on the time-frequency resource D. After the UE 2 receives the PI, the UE 2 may determine, based on a feature of the DCI_B or a feature of the data B, whether data indicated by the DCI_B exists on the time-frequency resource E. In scenario 2, after the UE 1 receives the PI, the UE 1 may further determine, based on the feature of the DCI_B or the feature of the data B, whether the data indicated by the DCI_B exists on the time-frequency resource E. The features of the DCI_A and the DCI_B herein include a type of the DCI or a start transmission location of the DCI. The features of the data A and the data B include a transmission time interval of transmitted data or a subcarrier spacing of transmitted data. In scenario 2, the features of the DCI_A and the DCI_B each further include a relative location for transmitting the DCI. The UE 1 may determine, based on the relative location for transmitting the DCI, whether the data A scheduled by using the DCI_A or the data B scheduled by using the DCI_B is transmitted on the time-frequency resource E. In scenario 2, the features of the data A and the data B each further include a relative location at which the data starts to be transmitted. The UE 1 may determine, based on the relative location at which the data starts to be transmitted, whether the data A scheduled by using the DCI_A or the data B scheduled by using the DCI_B is transmitted on the time-frequency resource E. In this application, the data scheduled by using the DCI may be equivalent to the data indicated by the DCI.

In scenario 2, when the UE 1 receives the DCI_A, the time-frequency resource A scheduled by using the DCI_A overlaps the time-frequency resource B scheduled by using the DCI_B. The UE 1 determines that the data A transmitted on the time-frequency resource A scheduled by using the DCI_A is not affected by the PI. The data A scheduled by using the DCI_A preempts a part or all of the time-frequency resource B that is scheduled by using the DCI_B and that is used to transmit the data B. Because a transmission delay requirement of the data A is quite low, data transmission cannot be performed after the data B is transmitted. In addition, in this case, the network device has no idle resource for use or does not have sufficient idle resources for use. Therefore, the network device allocates the time-frequency resource A to the data A by using the DCI_A, and the time-frequency resource A partially or completely overlaps the time-frequency resource B used to transmit the data B. When one UE receives two pieces of DCI in sequence and time-frequency resources scheduled by using the two pieces of DCI partially overlap, the UE may determine, by determining a sequence of receiving the DCI, whether receiving of corresponding data is affected by the PI, and a time-frequency resource used to transmit data scheduled by using DCI h preempted by DCI that is received latter. That is, receiving of data scheduled by using the DCI that is received latter is not affected by the PI, and receiving of data scheduled by using the DCI that is received earlier is affected by the PI.

In this application, that receiving of data scheduled by using a piece of DCI is affected by the PI means that after the UE receives the PI, data transmitted on an affected time-frequency resource does not participate in decoding performed by the UE on data scheduled by using the DCI. Specifically, according to the present invention, there are the following three implementations. (1) In the affected data transmission, data transmitted on the affected time-frequency resource still participates in decoding performed by the UE on data scheduled by using the DCI. However, the data transmitted on the affected time-frequency resource is flushed (flush) from a HARQ buffer corresponding to the data scheduled by using the DCI, and no longer participates in subsequent HARQ combination. (2) In the affected data transmission, before receiving the PI, the UE decodes all data scheduled by using the DCI. After receiving the PI, the UE performs decoding again after the UE excludes data transmitted on the affected time-frequency resource. (3) In the affected data transmission, before receiving the PI, the UE does not decode data scheduled by using the DCI. After receiving the PI, the UE performs decoding after the UE excludes data transmitted on the affected time-frequency resource. The affected time-frequency resource herein is an overlapped time-frequency resource of the preempted time-frequency resource that is indicated by the PI and the time-frequency resource that is scheduled by using the DCI. That receiving of data scheduled by using a piece of DCI is not affected by the PI means that after the UE receives the PI, the PI does not affect decoding of data scheduled by using the DCI. Decoding processing performed by the UE on the data scheduled by using the DCI is the same as processing performed when the PI is not received. Data transmitted on an affected time-frequency resource participates in decoding performed by the UE on the data scheduled by using the DCI.

When the data scheduled by using the DCI is affected by the PI, the data transmitted on the foregoing affected time-frequency resource may be flushed or excluded in three different processing manners. In a first manner, only the data transmitted on the affected time-frequency resource is flushed. In a second manner, for simplification, data of an entire affected code block (code block, CB) may be flushed. In a third manner, for further simplification, data of an entire affected code block group (CB group, CBG) is flushed. The affected CB or CBG herein means that a part of a time-frequency resource used to transmit the CB or the CBG is an affected time-frequency resource. The first processing manner may also be referred to as flushing (flush) physical data, and the second and third processing manners may also be referred to as flushing logical data.

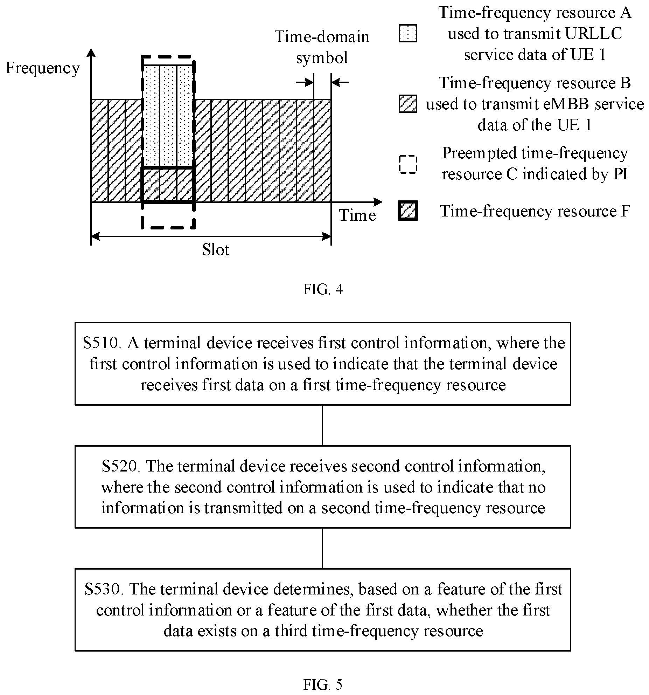

As shown in FIG. 5, this application provides a schematic flowchart of a method for preempting a resource to transmit data.

S510. A terminal device receives first control information from a network device, where the first control information is used to indicate that the terminal device receives first data on a first time-frequency resource.

Corresponding to the foregoing scenario 1 and scenario 2, the first control information herein may be the DCI_A or the DCI_B, the first time-frequency resource may be the time-frequency resource A or the time-frequency resource B, and the first data may be the data A or the data B. The first data may be data of one or more transport blocks (transport block, TB) in URLLC service data, and may alternatively be data of one or more TBs in eMBB service data.

S520. The terminal device receives second control information, where the second control information is used to indicate that no information is transmitted on a second time-frequency resource. Herein, no information transmission corresponds to a preempted case. When a time-frequency resource of a service 1 is preempted by another service 2, data of the service 2 instead of data of the service 1 is transmitted on the preempted time-frequency resource. Therefore, for the service 1, there is no information transmission.

Corresponding to the foregoing scenario 1 and scenario 2, the second control information herein may be the PI, and the second time-frequency resource may be the time-frequency resource C. Herein, that there is no information transmitted on the second time-frequency resource means that the time-frequency resource C is preempted, the data B transmitted on the time-frequency resource E is punctured, and no data B is transmitted on the corresponding time-frequency resource E, or a power of the data B transmitted on the time-frequency resource E is set to zero.

S530. The terminal device determines, based on a feature of the first control information or a feature of the first data, whether the first data exists on a third time-frequency resource, or the terminal device determines, based on a feature of the first control information or a feature of the first data, whether receiving of the first data is affected by the second control information, where the third time-frequency resource is an overlapped time-frequency resource of the first time-frequency resource and the second time-frequency resource. Further, when the terminal device determines that the first data exists on the third time-frequency resource, the data transmitted on the third time-frequency resource participates in decoding performed by the terminal device on the first data. When the terminal device determines that the first data does not exist on the third time-frequency resource, the data transmitted on the third time-frequency resource does not participate in decoding performed by the terminal device on the first data. For more specific descriptions, refer to the foregoing explanations that data receiving is affected by the PI.

Corresponding to the foregoing scenario 1 and scenario 2, the third time-frequency resource herein may be the time-frequency resource D or the time-frequency resource E.

Specifically, the feature of the first control information includes a type of the first control information or a start transmission location of the first control information.

Optionally, the terminal device determines that the first data exists on the third time-frequency resource when the type of the first control information is a first type. That is, receiving of the first data is not affected by the PI. The terminal device determines that the first data does not on the third time-frequency resource when the type of the first control information is not the first type. That is, receiving of the first data is affected by the PI. For a URLLC service, to improve DCI transmission reliability, compact (compact) DCI is usually used. Therefore, the first type herein may be compact DCI. Certainly, the first type may alternatively have another specific type name. A specific name of the first type is not limited in this application. A time-frequency resource scheduled by using first-type DCI is not allowed to be preempted. Correspondingly, receiving of data scheduled by using the first-type DCI is not affected by the PI. A specific value of the first type may be predefined in a protocol, or may be notified by the network device to the terminal device by using signaling after the network device determines the value.

Specifically, whether the type of the first control information is the first type may be determined in at least one of the following manners:
(1) A radio network temporary identifier (radio network temporary identifier, RNTI) used for scrambling the first control information is an RNTI of first-type control information.
(2) A payload size (payload size) of the first control information is equal to a payload size of first-type control information.
(3) A first field in the first control information indicates first-type control information. For example, a name of the first field is Identifier for DCI Formats.
(4) An error probability of the first control information meets a requirement of first-type control information for an error probability. The error probability herein may be a false alarm probability, or may be a missed alarm probability, or may be a combination of a false alarm probability and a missed alarm probability. Specifically, the error probability may be determined through check. For example, the error probability may be determined by using a length of a cyclic redundancy check (cyclic redundancy check, CRC) sequence. When the length of the CRC sequence is longer than a threshold, it is considered that the first control information is the first-type control information. Alternatively, the error probability may be determined by using a check step. When the first control information needs to be checked by using two or more steps, it is considered that the first control information is the first-type control information.
(5) When a coding scheme of the first control information is a particular coding scheme, it is determined that the first control information is first-type control information. For example, the coding scheme of the first control information may be one of a low-density parity-check (low-density parity-check, LDPC) coding or a polar (polar) coding.

Optionally, the terminal device determines that the first data exists on the third time-frequency resource when the start transmission location of the first control information is not a start location of a slot. That is, receiving of the first data is not affected by the PI. As shown in FIG. 1, when the URLLC service data preempts a time-frequency resource used to transmit the eMBB service data, the start transmission location of the DCI for scheduling the URLLC service data is not a start location of a slot, for example, is a fourth time domain symbol of the slot.

The feature of the first data includes a transmission time interval for transmitting the first data or a subcarrier spacing (subcarrier spacing, SCS) for transmitting the first data.

According to the present invention, the terminal device determines that the first data exists on the third time-frequency resource when the transmission time interval for transmitting the first data is less than a first threshold. That is, receiving of the first data is not affected by the PI. The terminal device determines that the first data does not exist on the third time-frequency resource when the transmission time interval for transmitting the first data is greater than or equal to the first threshold. That is, receiving of the first data is affected by the PI. The terminal device determines that the first data exists on the third time-frequency resource when the transmission time interval for transmitting the first data is less than or equal to the first threshold. That is, receiving of the first data is not affected by the PI. The terminal device determines that the first data does not exist on the third time-frequency resource when the transmission time interval for transmitting the first data is greater than the first threshold. That is, receiving of the first data is affected by the PI. The first threshold may be in a unit of a symbol, and values of the first threshold may be the same in different SCS scenarios. Alternatively, the first threshold may be in a unit of time, and values of the first threshold in different SCS scenarios may be set to different values. The first threshold may be predefined by a system, or may be determined by the network device and then notified to the terminal device by using signaling. In this application, a signaling notification may be radio resource control (radio resource control, RRC) signaling, physical layer signaling, or medium access control (medium access control) signaling. The signaling may be sent to a particular terminal device, or may be group signaling, that is, the signaling is sent to a group of terminal devices; or may be broadcast signaling, that is, the signaling is sent to all terminal devices in a cell.

Optionally, the terminal device determines that the first data exists on the third time-frequency resource when the subcarrier spacing for transmitting the first data is greater than a second threshold. That is, receiving of the first data is not affected by the PI. The terminal device determines that the first data does not exist on the third time-frequency resource when the subcarrier spacing for transmitting the first data is less than or equal to the second threshold. That is, receiving of the first data is affected by the PI. Optionally, the terminal device determines that the first data exists on the third time-frequency resource when the subcarrier spacing for transmitting the first data is greater than or equal to the second threshold. That is, receiving of the first data is not affected by the PI. The terminal device determines that the first data does not exist on the third time-frequency resource when the subcarrier spacing for transmitting the first data is less than the second threshold. That is, receiving of the first data is affected by the PI. The second threshold may be predefined by a system, or may be determined by the network device and then notified to the terminal device by using signaling.

In this embodiment of this application, the terminal device determines, based on the feature of the first control information or the feature of the first data, whether the first data exists on the third time-frequency resource, and implicitly determines receiving processing of the data on the third time-frequency resource, thereby reducing signaling overheads and improving air interface transmission efficiency.

### Embodiment 2 - not claimed

As described in the foregoing scenario 2, the URLLC service data of the UE 1 preempts a transmission resource used to transmit the eMBB service data of the UE 1. An indication granularity of the preempted time-frequency resource C indicated by the PI is relatively coarse. For example, what is indicated is that a time-frequency resource with a granularity of a symbol in time domain and a bandwidth part (bandwidth part, BWP) in frequency domain is preempted, or a time-frequency resource with a granularity of a symbol in time domain and a half of a BWP in frequency domain is preempted. In this way, a case shown in FIG. 4 may occur. Although the time-frequency resource C includes all time-frequency resources that are used to transmit the eMBB service data of the UE 1 and that are in a fourth symbol, a fifth symbol, and a sixth symbol. Actually, only a part of the time-frequency resource in the time-frequency resource C is used for the URLLC service data of the UE 1. In the fourth symbol, the fifth symbol, and the sixth symbol, the part of the time-frequency resource used to transmit the eMBB service data of the UE 1 is not preempted, for example, a time-frequency resource F in FIG. 4. In the prior art, the UE 1 can perform a data flush operation only based on the time-frequency resource C. Consequently, although the data on the time-frequency resource F is the eMBB service data, the data is flushed by the UE 1 due to impact of the PI, resulting in deteriorating data transmission performance of the UE 1.

For the scenario 2, the UE 1 may obtain specific locations of the time-frequency resource A, the time-frequency resource B, and the time-frequency resource C, to determine whether the time-frequency resource F exists. However, the UE 1 cannot determine whether a part of or all of the time-frequency resource in the time-frequency resource F is preempted by the URLLC service data of another terminal device. Therefore, the UE 1 cannot determine whether data transmitted on the time-frequency resource F can be reserved. However, the network device knows whether a part of or all of the time-frequency resource in the time-frequency resource F is preempted by URLLC service data of another terminal device, and the network device may notify, in real time by using DCI for scheduling the URLLC service data, the UE 1 of information about whether the time-frequency resource F is preempted by another terminal device. Therefore, the UE 1 may determine whether to flush the eMBB service data on the time-frequency resource F.

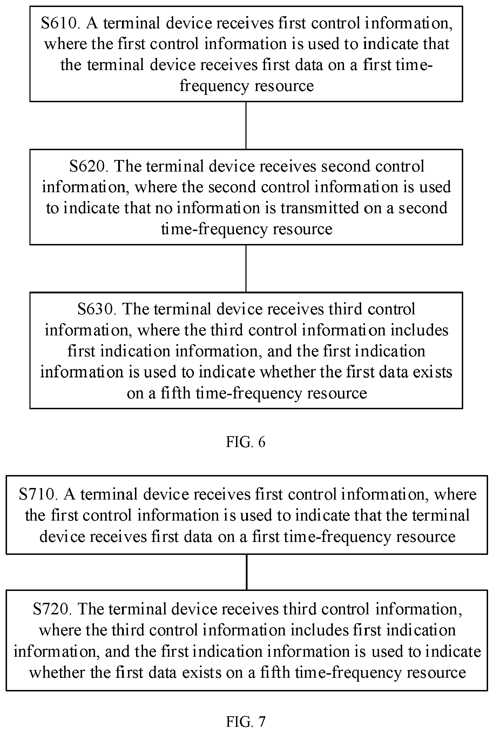

As shown in FIG. 6, this application provides a schematic flowchart of a method for preempting a resource to transmit data.

S610. A terminal device receives first control information from a network device, where the first control information is used to indicate that the terminal device receives first data on a first time-frequency resource.

Corresponding to the foregoing scenario 2, the first control information herein may be the DCI_B, the first time-frequency resource may be the time-frequency resource B, and the first data may be the data B. The first data may be data of one or more TBs in the eMBB service data.

S620. The terminal device receives second control information, where the second control information is used to indicate that no information is transmitted on a second time-frequency resource.

Corresponding to the foregoing scenario 2, the second control information herein may be the PI, and the second time-frequency resource may be the time-frequency resource C. That there is no information transmitted on the second time-frequency resource herein means that the time-frequency resource C is preempted, the data B transmitted on the time-frequency resource E is punctured, and no data B is transmitted on the corresponding time-frequency resource E, or a power of the data B transmitted on the time-frequency resource E is set to zero.

S630. The terminal device receives third control information, where the third control information is used to indicate that the terminal device receives third data on a fourth time-frequency resource; and the third control information includes first indication information, and the first indication information is used to indicate whether the terminal device has the first data on a fifth time-frequency resource, where the fifth time-frequency resource is a time-frequency resource that is of a sixth time-frequency resource and that does not overlap with a third time-frequency resource, the sixth time-frequency resource is an overlapped time-frequency resource of the fourth time-frequency resource and the second time-frequency resource, and the third time-frequency resource is an overlapped time-frequency resource of the first time-frequency resource and the second time-frequency resource.

Further, when the first indication information indicates that the first data exists on the fifth time-frequency resource, the data transmitted on the fifth time-frequency resource participates in decoding performed by the terminal device on the first data. The data transmitted on the fifth time-frequency resource does not participate in decoding performed by the terminal device on the first data when the first indication information indicates that the first data does not exist on the fifth time-frequency resource. For more specific descriptions, refer to the explanation in the foregoing Embodiment 1 that data receiving is affected by the PI.

Corresponding to the scenario 2, the third control information herein is the DCI_A, the fourth time-frequency resource is the time-frequency resource A, and the third data is the data A. The third data is data of one or more transport blocks (transport block, TB) of the URLLC service data. The fifth time-frequency resource corresponds to the time-frequency resource F in FIG. 4.

Specifically, the first indication information may be one bit, and is used to indicate whether the first data exists on the fifth time-frequency resource. For example, it indicates that the first data needs to exist on the fifth time-frequency resource when a value of the first indication information is 1. That is, receiving of the first data is not affected by the second control information. It indicates that the first data does not exist on the fifth time-frequency resource when the value of the first indication information is 0. That is, receiving of the first data is affected by the second control information. Alternatively, it indicates that the first data needs to exist on the fifth time-frequency resource when the value of the first indication information is 0. It indicates that there is no first data on the fifth time-frequency resource when the value of the first indication information is 1.

In a special case of scenario 2, if only the URLLC service data of the UE 1 preempts the eMBB service data of the UE 1 in a time-frequency region corresponding to a reference downlink resource (reference downlink resource, RDR), the network device may not send the PI. A corresponding embodiment is shown in FIG. 7.

S710. A terminal device receives first control information from a network device, where the first control information is used to indicate that the terminal device receives first data on a first time-frequency resource.

Corresponding to scenario 2, the first control information herein may be the DCI_B, the first time-frequency resource may be the time-frequency resource B, and the first data may be the data B. The first data may be data of one or more TBs in the eMBB service data.

S720. The terminal device receives third control information, where the third control information is used to indicate that the terminal device receives third data on a fourth time-frequency resource; and the third control information further includes first indication information, and the first indication information is used to indicate that whether the terminal device has first data on a fifth time-frequency resource, where time domain of the fifth time-frequency resource corresponds to overlapped time domain of the first time-frequency resource and the fourth time-frequency resource, and frequency domain of the fifth time-frequency resource corresponds to non-overlapped frequency domain of the first time-frequency resource and the fourth time-frequency resource.

Further, the data transmitted on the fifth time-frequency resource participates in decoding performed by the terminal device on the first data when the first indication information indicates that the first data exists on the fifth time-frequency resource. The data transmitted on the fifth time-frequency resource does not participate in decoding performed by the terminal device on the first data when the first indication information indicates that the first data does not exist on the fifth time-frequency resource.

Corresponding to the scenario 2, the third control information herein is the DCI_A, the fourth time-frequency resource is the time-frequency resource A, and the third data is the data A. The third data is data of one or more transport blocks (transport block, TB) of the URLLC service data. The fifth time-frequency resource corresponds to the time-frequency resource F in FIG. 4.

Specifically, the first indication information may be one bit, and is used to indicate whether the first data exists on the fifth time-frequency resource. For example, it indicates that the first data needs to exist on the fifth time-frequency resource when the value of the first indication information is 1, that is, the data on the fifth time-frequency resource is not flushed. It indicates that there is no first data on the fifth time-frequency resource when the value of the first indication information is 0. Alternatively, it indicates that the first data needs to exist on the fifth time-frequency resource when the value of the first indication information is 0. It indicates that there is no first data on the fifth time-frequency resource when the value of the first indication information is 1.

In the embodiments shown in FIG. 6 and FIG. 7, the terminal is an execution body. The terminal device determines, based on the first indication information, whether the terminal device has the first data on the fifth time-frequency resource, and explicitly indicates receiving and processing of the data on the fifth time-frequency resource, to avoid flushing data that can participate in decoding, thereby improving air interface transmission efficiency.

### Embodiment 3 - not claimed

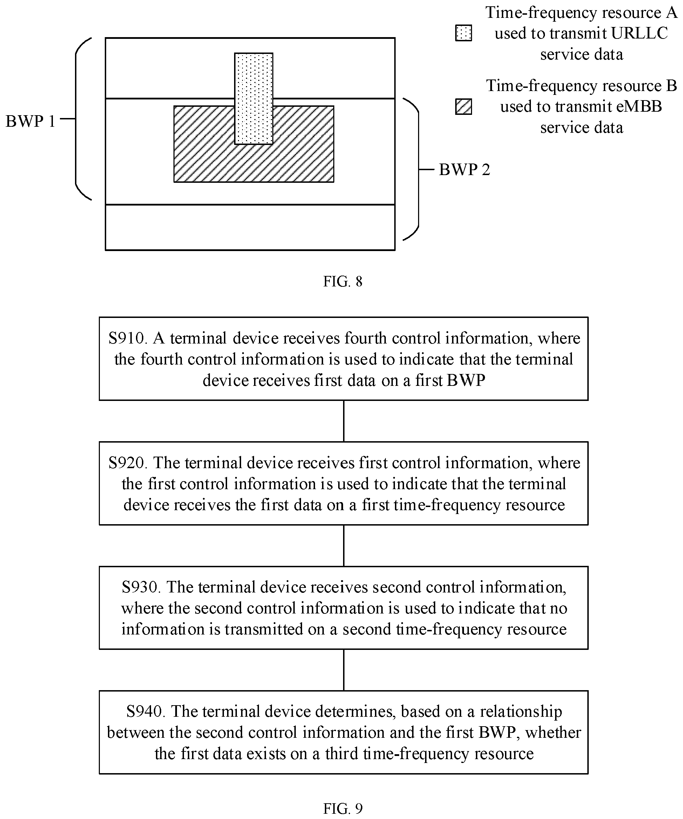

As shown in FIG. 8, UE 1 receives the URLLC service data by using the time-frequency resource A, and receives the eMBB service data by using the time-frequency resource B. The network device configures two BWPs for the UE 1, a BWP 1 for the URLLC service, and a BWP 2 for the eMBB service. In FIG. 8, a part of the time-frequency resource A overlaps the time-frequency resource B, that is, a URLLC service data part preempts the time-frequency resource B. Because a time-frequency resource used to transmit the eMBB service data in the BWP 2 is preempted, the network device sends the PI corresponding to the BWP 2, or sends the PI in the BWP 2. Correspondingly, after receiving the PI in the BWP 2, the UE 1 determines, based on the PI, that the time-frequency resource used to transmit the eMBB service data is preempted. However, the UE 1 does not determine, based on the PI in the BWP 2, that the time-frequency resource used to transmit the URLLC service data is preempted, because the URLLC service belongs to the BWP 1 and does not belong to the BWP 2. Therefore, the UE 1 cannot determine, based on the PI in the BWP 2, a case in which the time-frequency resource used to transmit service data in the BWP 1 is preempted. If the network device does not configure a PI-related resource or start a PI mechanism in the BWP 1, the UE may consider that a time-frequency resource of service data belonging to the BWP 1 is not preempted.

In the foregoing description, the BWP configuration may be adding an indication field to the DCI for scheduling data, to indicate a BWP to which the currently scheduled data belongs, or adding an indication field to indicate a BWP to which data scheduled n times belongs, where n is a positive integer.

As shown in FIG. 9, this application provides a schematic flowchart of a method for preempting a resource to transmit data.

S910. A terminal device receives fourth control information from a network device, where the fourth control information is used to indicate that the terminal device receives first data on a first BWP.

For example, the network device allocates, to the UE1, a BWP 1 to transmit the URLLC service data, and/or allocates a BWP 2 to transmit the eMBB service data. The fourth control information may be carried by using RRC signaling or physical layer signaling.

S920. The terminal device receives first control information from the network device, where the first control information is used to indicate that the terminal device receives the first data on a first time-frequency resource.

Corresponding to the foregoing scenario 1 and scenario 2, the first control information herein may be the DCI_A or the DCI_B, the first time-frequency resource may be the time-frequency resource A or the time-frequency resource B, and the first data may be the data A or the data B. The first data may be data of one or more transport blocks (transport block, TB) in URLLC service data, and may alternatively be data of one or more TBs in eMBB service data.

S930. The terminal device receives second control information, where the second control information is used to indicate that no information is transmitted on a second time-frequency resource.

Corresponding to the foregoing scenario 1 and scenario 2, the second control information herein may be the PI, and the second time-frequency resource may be the time-frequency resource C. That there is no information transmitted on the second time-frequency resource herein means that the time-frequency resource C is preempted, the data B transmitted on the time-frequency resource E is punctured, and no data B is transmitted on the corresponding time-frequency resource E, or a power of the data B transmitted on the time-frequency resource E is set to zero.

S940. The terminal device determines, based on a relationship between the second control information and the first BWP, whether the first data exists on a third time-frequency resource, or the terminal device determines, based on a relationship between the second control information and the first BWP, whether receiving of the first data is affected by the second control information, where the third time-frequency resource is an overlapped time-frequency resource of the first time-frequency resource and the second time-frequency resource. Further, the data transmitted on the third time-frequency resource participates in decoding performed by the terminal device on the first data when the terminal device determines that the first data exists on the third time-frequency resource. The data transmitted on the third time-frequency resource does not participate in decoding performed by the terminal device on the first data when the terminal device determines that the first data does not exist on the third time-frequency resource. For more specific descriptions, refer to the explanation in the foregoing Embodiment 1 that data receiving is affected by the PI.

Corresponding to the foregoing scenario 1 and scenario 2, the third time-frequency resource herein may be the time-frequency resource D or the time-frequency resource E, and the second data is the data A transmitted on the time-frequency resource D or the data B transmitted on the time-frequency resource E.

Specifically, the terminal device determines that the first data does not exist on the third time-frequency resource when the second control information corresponds to the first BWP, or the second control information belongs to the first BWP. The terminal device determines that the first data exists on the third time-frequency resource when the second control information does not correspond to the first BWP, or the second control information does not belong to the first BWP.

An application scenario of Embodiment 3 is not limited to scenario 1 or scenario 2, and may alternatively be another application scenario. More generally, receiving of data scheduled by using the DCI is not affected by the PI belonging to different BWPs. For example, data scheduled by using DCI 1 belongs to the BWP 1. If the PI does not belong to the BWP 1, data scheduled by using the DCI 1 is not affected by the PI.

In the foregoing embodiment provided in this application, the data transmission method provided in this embodiment of this application is described from a perspective of the terminal device. It may be understood that, to implement the foregoing functions, the terminal device includes a corresponding hardware structure and/or software module for performing the functions. A person of ordinary skill in the art should easily be aware that, in combination with the examples described in the embodiments disclosed in this specification, units, methods steps may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

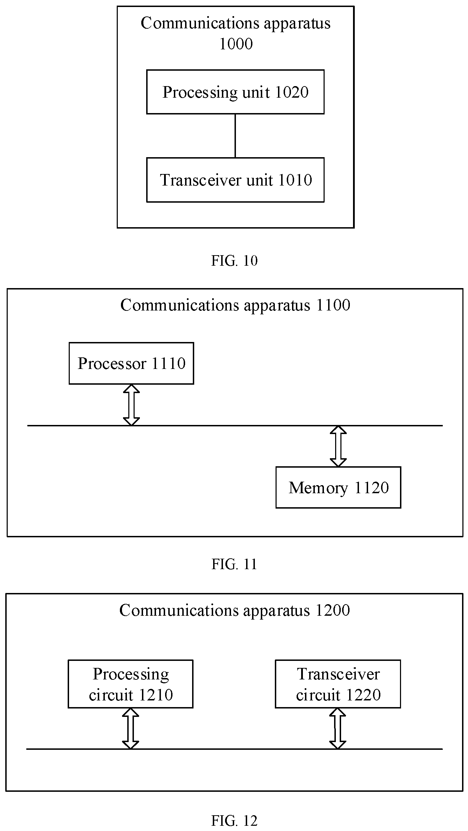

FIG. 10, FIG. 11, and FIG. 12 are schematic structural diagrams of three possible communications apparatuses according to this application. The communications apparatus implements functions of the terminal device in the foregoing methods described above, and therefore can also implement beneficial effects of the method embodiments. In this application, the communications apparatus may be the terminal device 230 or the terminal device 240 shown in FIG. 2, or may be a chip applied to the terminal device.

As shown in FIG. 10, a communications apparatus 1000 includes a transceiver unit 1010 and a processing unit 1020.

Based on related descriptions of the foregoing method Embodiment 1, the following apparatus embodiment corresponding to the method Embodiment 1 may be obtained.

The transceiver unit 1010 is configured to receive first control information, where the first control information is used to indicate that the transceiver unit 1010 receives first data on a first time-frequency resource.

The transceiver unit 1010 is further configured to receive second control information, where the second control information is used to indicate that no information is transmitted on a second time-frequency resource.

The processing unit 1020 is configured to determine, based on a feature of the first control information or a feature of the first data, whether the first data exists on a third time-frequency resource, where the third time-frequency resource is an overlapped time-frequency resource of the first time-frequency resource and the second time-frequency resource.

The processing unit 1020 is further configured to receive third control information, where the third control information is used to indicate that the transceiver unit 1010 receives third data on a fourth time-frequency resource; and the third control information includes first indication information, and the first indication information is used to indicate whether there is the first data sent to the communications apparatus on a fifth time-frequency resource, where the fifth time-frequency resource is a time-frequency resource that is of a sixth time-frequency resource and that does not overlap with the third time-frequency resource, and the sixth time-frequency resource is an overlapped time-frequency resource of the fourth time-frequency resource and the second time-frequency resource.

Based on related descriptions of the foregoing method embodiment 3, the following apparatus embodiment corresponding to the method embodiment 3 may be obtained.

The transceiver unit 1010 is configured to receive fourth control information, where the fourth control information is used to indicate that the transceiver unit 1010 receives first data on a first bandwidth part BWP.

The transceiver unit 1010 is further configured to receive first control information, where the first control information is used to indicate that the transceiver unit 1010 receives the first data on a first time-frequency resource.

The transceiver unit 1010 is further configured to receive second control information, where the second control information is used to indicate that no information is transmitted on a second time-frequency resource.

The processing unit 1020 is configured to determine, based on a relationship between the second control information and the first BWP, whether the first data exists on a third time-frequency resource, where the third time-frequency resource is an overlapped time-frequency resource of the first time-frequency resource and the second time-frequency resource.

Based on related descriptions of the second method embodiment, an apparatus embodiment corresponding to the method Embodiment 2 may be obtained, and details are not described herein.

For more detailed descriptions of the transceiver unit 1010 and the processing unit 1020, directly refer to the foregoing method embodiments. Details are not described herein.

As shown in FIG. 11, a communications apparatus 1100 includes a processor 1110 and a memory 1120. The memory 1120 is configured to store a computer program or an instruction. The processor 1110 is configured to execute the computer program or the instruction stored in the memory. When the processor 1110 executes the computer program or the instruction stored in the memory 1120, the communications apparatus 1100 is configured to implement the method in the method embodiments. Components in the communications apparatus 1100 communicate with each other by using an internal connection path, for example, transfer a control and/or data signal by using a bus. A quantity of processors 1110 and memories 1120 that are included in the communications apparatus 1100 is not limited in this application.

As shown in FIG. 12, a communications apparatus 1200 includes a processing circuit 1210 and a transceiver circuit 1220. The processing circuit 1210 is configured to perform a function of the foregoing processing unit 1010, and the transceiver circuit 1220 is configured to perform a function of the foregoing transceiver unit 1020. Circuits in the communications apparatus 1200 communicate with each other by using an internal circuit.

When the foregoing communications apparatus is a chip of a terminal device, the chip of the terminal device implements functions of the terminal device in the foregoing method embodiments. The terminal device chip receives information from another module (for example, a radio frequency module or an antenna) in the terminal device, and the information is sent by the network device to the terminal device.

In this application, unless otherwise specified, terms and descriptions in different embodiments are consistent and may be mutually referenced. Technical features may be combined based on an internal logical relationship of the technical features to form a new embodiment.

It should be noted that the processor in the embodiments of this application may be a central processing unit (Central Processing Unit, CPU), may be another general-purpose processor, a digital signal processor (Digital Signal Processor, DSP), an application specific integrated circuit (Application Specific Integrated Circuit, ASIC), a field programmable gate array (Field-Programmable Gate Array, FPGA), or another programmable logical device, a transistor logical device, a hardware component, or any combination thereof. A general-purpose processor may be a microprocessor or any conventional processor or the like.

The method steps in this application may be implemented by hardware, or may be implemented by a processor by executing a software instruction. The software instruction may include a corresponding software module. The software module may be stored in a random access memory (Random Access Memory, RAM), a flash memory, a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), a register, a hard disk, a removable hard disk, a CD-ROM, or any other form of storage medium well-known in the art. For example, a storage medium is coupled to a processor, so that the processor can read information from the storage medium or write information into the storage medium. Certainly, the storage medium may be a component of the processor. The processor and the storage medium may be located in the ASIC. In addition, the ASIC may be located in a sending device or a receiving device. Certainly, the processor and the storage medium may exist in a sending device or a receiving device as discrete components.

All or some of the foregoing embodiments may be implemented by using software, hardware, firmware, or any combination thereof. When software is used to implement the embodiments, the embodiments may be implemented completely or partially in a form of a computer program product. The computer program product includes one or more computer instructions. When the computer program instructions are loaded and executed on the computer, the procedure or functions according to the embodiments of this application are all or partially generated. The computer may be a general-purpose computer, a dedicated computer, a computer network, or other programmable apparatuses. The computer instruction may be stored in a computer readable storage medium, or may be transmitted by using the computer readable storage medium. The computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a soft disk, a hard disk, or a magnetic tape), an optical medium (for example, a digital versatile disc (DVD)), a semiconductor medium (for example, a solid-state disk (Solid-State Disk, SSD)), or the like.

In this application, "a plurality of" means two or more than two. The term "and/or" in this specification describes only an association relationship for describing associated objects and represents that three relationships may exist. For example, A and/or B may represent the following three cases: Only A exists, both A and B exist, and only B exists. In addition, the character "/" in this specification generally represents an "or" relationship between the associated objects, and the character "/" in a formula represents a "division" relationship between the associated objects.

It may be understood that numbers in the embodiments of this application are merely for differentiation for ease of description, and are not intended to limit the scope of the embodiments of this application.

It should be understood that sequence numbers of the foregoing processes do not mean execution sequences in the embodiments of this application. The execution sequences of the processes should be determined according to functions and internal logic of the processes, and should not be construed as any limitation on the implementation processes of the embodiments of this application.

The foregoing descriptions are merely specific implementations of the embodiments of this application. Any variation or replacement readily figured out by a person skilled in the art within the technical scope disclosed in this application shall fall within the protection scope in the embodiments of this application.

## Claims

1. A method performed by a terminal device, the method comprising:
• receiving (S510) first control information from a network device, wherein the first control information is used to indicate that the terminal device receives first data on a first time-frequency resource from the network device;
• receiving (S520) second control information from the network device, wherein the second control information is used to indicate that no first data is transmitted on a second time-frequency resource from the network device to the terminal device;
• **characterized by** determining (S530):
o that the first data nevertheless exist on a third time-frequency resource when a subcarrier spacing for transmitting the first data is greater than a threshold; and
o that the first data do not exist on the third time-frequency resource when the subcarrier spacing for transmitting the first data is less than or equal to the threshold, thereby determining that those time-frequency resources contained in the third time-frequency resource are preempted by the network device and used by the network device for transmitting second data to the terminal on the preempted time-frequency resources, wherein the third time-frequency resource is an overlapped time-frequency resource of the first time-frequency resource and the second time-frequency resource, and the first data are data of a first service, and the second data are data of a second service, the first service being different from the second service;
• if it is determined that the first data exist on the third time-frequency resource, determining that the first data on the third time-frequency resource participate in decoding of the first data scheduled by the first control information;
if it is determined that the first data do not exist on the third time-frequency resource, determining that the first data on the third time-frequency resource do not participate in the decoding of the first data scheduled by the first control information, wherein the determining that the first data on the third time-frequency resource do not participate in the decoding of the first data scheduled by the first control information comprises:
o determining that the second data transmitted on the preempted time-frequency resources still participate in decoding of the first data, but those second data on the preempted time-frequency resources are flushed from a HARQ buffer of the first data, so that those second data transmitted on the preempted time-frequency resource no longer take part in a HARQ combining for the first data after the decoding; or
o if all first data scheduled by the first control information were already decoded before the reception of the second control information, determining to perform the decoding, after the reception of the second control information, again on only those first data not transmitted on the preempted time-frequency resources; or
o if, before the reception of the second control information, no first data scheduled by the first control information were yet decoded, decoding only those first data not transmitted on the preempted time-frequency resource after the reception of the second control information.

2. A terminal device configured to perform the method according to claim 1.

3. A computer-readable storage medium, configured to store a computer program or an instruction, wherein when the computer program or the instruction is run on a computer of a terminal device, the computer is enabled to perform the method according to claim 1.

4. A computer program product, wherein when the computer program product is run on a computer of a terminal device, the computer is enabled to perform the method according to claim 1.

## Patentansprüche

1. Verfahren, das durch eine Endgerätevorrichtung durchgeführt wird, wobei das Verfahren Folgendes umfasst:
• Empfangen (S510) erster Steuerinformationen von einer Netzwerkvorrichtung, wobei die ersten Steuerinformationen verwendet werden, um anzugeben, dass die Endgerätevorrichtung auf einer ersten Zeit-Frequenz-Ressource erste Daten von der Netzwerkvorrichtung empfängt;
• Empfangen (S520) zweiter Steuerinformationen von der Netzwerkvorrichtung, wobei die zweiten Steuerinformationen verwendet werden, um anzugeben, dass keine ersten Daten auf einer zweiten Zeit-Frequenz-Ressource von der Netzwerkvorrichtung an die Endgerätevorrichtung übertragen werden;
• **gekennzeichnet durch** das Bestimmen (S530):
o dass die ersten Daten dennoch auf einer dritten Zeit-Frequenz-Ressource vorhanden sind, wenn ein Unterträgerabstand zur Übertragung der ersten Daten größer als ein Schwellenwert ist; und
o dass die ersten Daten auf der dritten Zeit-Frequenz-Ressource nicht vorhanden sind, wenn der Unterträgerabstand zur Übertragung der ersten Daten kleiner oder gleich dem Schwellenwert ist, wodurch bestimmt wird, dass die in der dritten Zeit-Frequenz-Ressource enthaltenen Zeit-Frequenz-Ressourcen durch die Netzwerkvorrichtung vorbestimmt und durch die Netzwerkvorrichtung zum Übertragen von zweiten Daten an die Endgerätevorrichtung auf den vorbestimmten Zeit-Frequenz-Ressourcen verwendet werden, wobei die dritte Zeit-Frequenz-Ressource eine überlappte Zeit-Frequenz-Ressource der ersten Zeit-Frequenz-Ressource und der zweiten Zeit-Frequenz-Ressource ist und die ersten Daten Daten eines ersten Dienstes sind und die zweiten Daten Daten eines zweiten Dienstes sind,
wobei sich der erste Dienst von dem zweiten Dienst unterscheidet;
• wenn bestimmt wird, dass die ersten Daten auf der dritten Zeit-Frequenz-Ressource vorhanden sind, Bestimmen, dass die ersten Daten auf der dritten Zeit-Frequenz-Ressource an der Decodierung der ersten Daten beteiligt sind, die durch die ersten Steuerinformationen geplant ist;
wenn bestimmt wird, dass die ersten Daten auf der dritten Zeit-Frequenz-Ressource nicht vorhanden sind, Bestimmen, dass die ersten Daten auf der dritten Zeit-Frequenz-Ressource nicht an der Decodierung der ersten Daten beteiligt sind, die durch die ersten Steuerinformationen geplant ist, wobei das Bestimmen, dass die ersten Daten auf der dritten Zeit-Frequenz-Ressource nicht an der Decodierung der ersten Daten beteiligt sind, die durch die ersten Steuerinformationen geplant ist, Folgendes umfasst:
o Bestimmen, dass die zweiten Daten, die auf den vorbestimmten Zeit-Frequenz-Ressourcen übertragen werden, noch an der Decodierung der ersten Daten beteiligt sind, aber diese zweiten Daten auf den vorbestimmten Zeit-Frequenz-Ressourcen aus einem HARQ-Puffer der ersten Daten gelöscht werden, sodass diese zweiten Daten, die auf der vorbestimmten Zeit-Frequenz-Ressource übertragen werden, nach der Decodierung nicht mehr an einer HARQ-Kombination für die ersten Daten beteiligt sind; oder
o wenn alle durch die ersten Steuerinformationen geplanten ersten Daten bereits vor dem Empfangen der zweiten Steuerinformationen decodiert wurden, Bestimmen, nach dem Empfang der zweiten Steuerinformationen, dass die Decodierung wieder nur an denjenigen ersten Daten durchgeführt wird, die nicht auf den vorbestimmten Zeit-Frequenz-Ressourcen übertragen wurden; oder
o wenn vor dem Empfangen der zweiten Steuerinformationen noch keine durch die ersten Steuerinformationen geplanten erste Daten decodiert wurden, Decodieren nur derjenigen ersten Daten, die nach dem Empfang der zweiten Steuerinformationen nicht auf den vorbestimmten Zeit-Frequenz-Ressourcen übertragen wurden.

2. Endgerätevorrichtung, die dazu konfiguriert ist, das Verfahren nach Anspruch 1 durchzuführen.

3. Computerlesbares Speichermedium, das dazu konfiguriert ist, ein Computerprogramm oder Anweisungen zu speichern, wobei, wenn das Computerprogramm oder die Anweisungen auf einem Computer einer Endgerätevorrichtung ausgeführt werden, der Computer in die Lage versetzt wird, das Verfahren nach Anspruch 1 durchzuführen.

4. Computerprogrammprodukt, wobei, wenn das Computerprogrammprodukt auf einem Computer einer Endgerätevorrichtung ausgeführt wird, der Computer in die Lage versetzt wird, das Verfahren nach Anspruch 1 durchzuführen.

## Revendications

1. Procédé mis en œuvre par un dispositif terminal, le procédé comprenant :
• la réception (S510) des premières informations de commande provenant d'un dispositif de réseau, dans lequel les premières informations de commande sont utilisées pour indiquer que le dispositif terminal reçoit des premières données sur une première ressource temps-fréquence provenant du dispositif de réseau ;
• la réception (S520) des secondes informations de commande provenant du dispositif de réseau, les secondes informations de commande étant utilisées pour indiquer qu'aucune première donnée n'est transmise sur une deuxième ressource temps-fréquence provenant du dispositif de réseau vers le dispositif terminal ;
• **caractérisé par** le fait de déterminer (S530) :
o que les premières données existent néanmoins sur une troisième ressource temps-fréquence lorsqu'un espacement de sous-porteuse pour transmettre les premières données est supérieur à un seuil ; et
o que les premières données n'existent pas sur la troisième ressource temps-fréquence lorsque l'espacement de sous-porteuse pour transmettre les premières données est inférieur ou égal au seuil, déterminant ainsi que ces ressources temps-fréquence contenues dans la troisième ressource temps-fréquence sont préemptées par le dispositif de réseau et utilisées par le dispositif de réseau pour transmettre des secondes données au terminal sur les ressources temps-fréquence préemptées, la troisième ressource temps-fréquence étant une ressource temps-fréquence chevauchée de la première ressource temps-fréquence et de la deuxième ressource temps-fréquence, et les premières données étant des données d'un premier service, et les secondes données étant des données d'un second service, le premier service étant différent du second service ;
• s'il est déterminé que les premières données existent sur la troisième ressource temps-fréquence, le fait de déterminer que les premières données sur la troisième ressource temps-fréquence participent au décodage des premières données programmées par les premières informations de commande ;
s'il est déterminé que les premières données n'existent pas sur la troisième ressource temps-fréquence, le fait de déterminer que les premières données sur la troisième ressource temps-fréquence ne participent pas au décodage des premières données programmées par les premières informations de commande, dans lequel le fait de déterminer que les premières données sur la troisième ressource temps-fréquence ne participent pas au décodage des premières données programmées par les premières informations de commande comprend :
o le fait de déterminer que les secondes données transmises sur les ressources temps-fréquence préemptées participent toujours au décodage des premières données, mais que ces secondes données sur les ressources temps-fréquence préemptées sont vidées d'un tampon HARQ des premières données, de sorte que ces secondes données transmises sur la ressource temps-fréquence préemptée ne participent plus à une combinaison HARQ pour les premières données après le décodage ; ou
o si toutes les premières données programmées par les premières informations de commande étaient déjà décodées avant la réception des secondes informations de commande, la détermination pour effectuer le décodage, après la réception des secondes informations de commande, à nouveau sur uniquement les premières données non transmises sur les ressources temps-fréquence préemptées ; ou
o si, avant la réception des secondes informations de commande, aucune première donnée programmée par les premières informations de commande n'a encore été décodée, le décodage uniquement de ces premières données non transmises sur la ressource temps-fréquence préemptée après la réception des secondes informations de commande.

2. Dispositif terminal configuré pour exécuter le procédé selon la revendication 1.

3. Support de stockage lisible par ordinateur, configuré pour stocker un programme informatique ou une instruction, dans lequel, lorsque le programme informatique ou l'instruction sont exécutés sur un ordinateur d'un dispositif terminal, l'ordinateur est activé pour exécuter le procédé selon la revendication 1.

4. Produit de programme informatique, dans lequel lorsque le produit de programme informatique est exécuté sur un ordinateur d'un dispositif terminal, l'ordinateur est activé pour mettre en œuvre le procédé selon la revendication 1.
